# EUROPEAN PATENT APPLICATION

(11) **EP 1 801 039 A1**
(43) Date of publication of application: **27.06.2007**
(21) Application number: 06026460.3
(22) Date of filing: 20.12.2006
(51) Int. Cl.: B65G 1/06, B60P 3/055, A47B 81/00, A47B 87/02

(54) **Storage rack with puller assembley**

(30) Priority: 21.12.2005 US 752296 P; 18.12.2006 US 640562
(71) Applicant: Kelly, Daniel E., Medford, NJ 08055 (US)
(72) Inventor: Donnell, Emerson B., Basking Ridge New Jersey 07920 (US)
(74) Representative: Wallace, Alan Hutchinson

(57) **Abstract**

A storage rack comprising a storage unit housing defining at least one aperture (5) extending longitudinally between a forward end and a rearward end. A puller assembly (50) is positioned in the aperture (5) and Includes a longitudinal puller body (52) that supports an engagement member (54) adjacent a rear end thereof. The puller assembly (50) is moveable between a first position in which the engagement member (54) is adjacent the aperture (5) rearward end and a second position In which the engagement member (54) is moved toward the aperture (5) forward end. The storage unit housing and the puller assembly (50) are configured such that the engagement member (54) is supported during movement between the first and second positions.

## Description

### FIELD OF THE INVENTION

This Invention relates generally to a rack for storing storable members, such as water bottles, and more specifically to storage units having a puller assembly for facilitating removal of the storable members from the storage unit.

### BACKGROUND TO THE INVENTION

One example of a storable member typically stored and transported In racks Is a generally cylindrical water bottle. These water bottles are typically handled, transported, and stored in varying quantities. For easier handling, transport, and storage, the water bottles may be loaded in carriers designed to accommodate multiple bottles. Each carrier defines one or more apertures configured to receive and support the bottles In a horizontal position. To accommodate a larger number of bottles, each aperture Is typically configured to receive two bottles, one behind the other. To further accommodate the varying quantities of bottles, aluminum and plastic modular racks are available comprising carriers designed to be vertically stackable. These modular racks are formed by stacking bottle storage units or carriers to define a rack approximately six feet or more in height.

Once a rack is assembled in a delivery truck, the upper storage units or carriers are often at a height equal to the height of the delivery truck. As such, the delivery person must reach to access the storable members or bottles in the upper storage units or carriers. Such access Is difficult, and potentially dangerous, particularly for the bottles that are stored rearwardly in the storage unit aperture.

To overcome the shortcomings of existing modular racks, a need exists for a storage rack that provides a reliable assembly to ease access to storable members stored In a rearward position within the rack apertures.

### SUMMARY OF THE INVENTION

To meet these and other needs, and In view of its purposes, an exemplary embodiment of the present invention provides a storage rack comprising a storage unit housing defining at least one aperture extending longitudinally between a forward end and a rearward end. The aperture Is adapted to receive at least one storable member. A puller assembly Is positioned in the aperture. The puller assembly includes a longitudinal puller body that supports an engagement member adjacent a rear end thereof. The puller assembly Is moveable between a first position in which the engagement member Is adjacent the aperture rearward end and a second position In which the engagement member is moved toward the aperture forward end. The storage unit housing and the puller assembly are configured such that the engagement member is supported during movement between the first and second positions such that the chance of disengagement of the engagement member from the storable member during movement is reduced.

It Is to be understood that both the foregoing general description and the following detailed description are exemplary, but are not restrictive, of the invention.

### BRIEF DESCRIPTION OF THE DRAWINGS

The invention is best understood from the following detailed description when read in connection with the accompanying drawings. It is emphasized that, according to common practice, the various features of the drawings are not to scale. On the contrary, the dimensions of the various features are arbitrarily expanded or reduced for clarity. Included in the drawings are the following figures:
Fig. 1 is a front Isometric view of a storage unit according to a first exemplary embodiment of the present invention;
Fig. 2 Is a front isometric view of the storage unit of Fig. 1 with an upper half of the storage unit housing removed;
Fig. 3 Is a rear isometric view of the storage unit of Fig. 1 with an upper half of the storage unit housing removed;
Fig. 4 is an expanded view, as indicated in Fig. 3, of a portion of the storage unit of Fig. 1;
Fig. 5 Is a rear isometric view of a puller assembly utilized In the storage unit of Fig. 1;
Fig. 6 is a partial elevational view of an alternate puller assembly and guide slot of the storage unit of Fig. 1;
Fig. 7 is a front Isometric view of a storage unit according to a second exemplary embodiment of the present Invention with an upper half of the storage unit housing removed;
Fig. 8 Is a front isometric view of a puller assembly utilized in the storage unit of Fig. 7;
Fig. 9 is an expanded view, as Indicated In Fig. 8, of a portion of the puller assembly of Fig. 8;
Fig. 10 Is a bottom Isometric view of a portion of the storage unit of Fig. 7 showing a puller return assembly;
Fig. 11 is a front isometric view of a storage unit according to a third exemplary embodiment of the present invention;
Fig. 12 is a front isometric view of the storage unit of Fig. 11 with an upper half of the storage unit housing removed;
Fig. 13 is a rear isometric view of the storage unit of Fig. 11 with an upper half of the storage unit housing removed;
Fig. 14 is a front isometric view of a puller assembly utilized in the storage unit of Fig. 11;
Fig. 15 Is a front isometric view of a storage unit according to a fourth exemplary embodiment of the present invention;
Fig. 16 is a rear isometric view of the storage unit of Fig. 15;
Fig. 17 Is a rear, bottom isometric view of a puller assembly utilized in the storage unit of Fig. 15;
Fig. 18 is a rear, top isometric view of a puller assembly utilized in the storage unit of Fig. 15;
Fig. 19 is a front isometric view of a storage unit according to a fifth exemplary embodiment of the present invention with an upper half of the storage unit housing removed;
Fig. 20 is an expanded view, as indicated In Fig. 19, of a portion of the storage unit of Fig. 19;
Fig. 21 is a bottom Isometric view of a portion of the storage unit of Fig. 19 showing passage of the puller assembly therethrough;
Fig. 22 Is a front, top Isometric view of a storage unit according to a sixth exemplary embodiment of the present Invention;
Fig. 23 is an isometric view of a shock dampener utilized in the storage unit of Fig. 22;
Fig. 24 Is a front, bottom isometric view of the storage unit of Fig. 22;
Fig. 25 Is a front elevation view of the storage unit of Fig. 22.

### DETAILED DESCRIPTION OF THE INVENTION

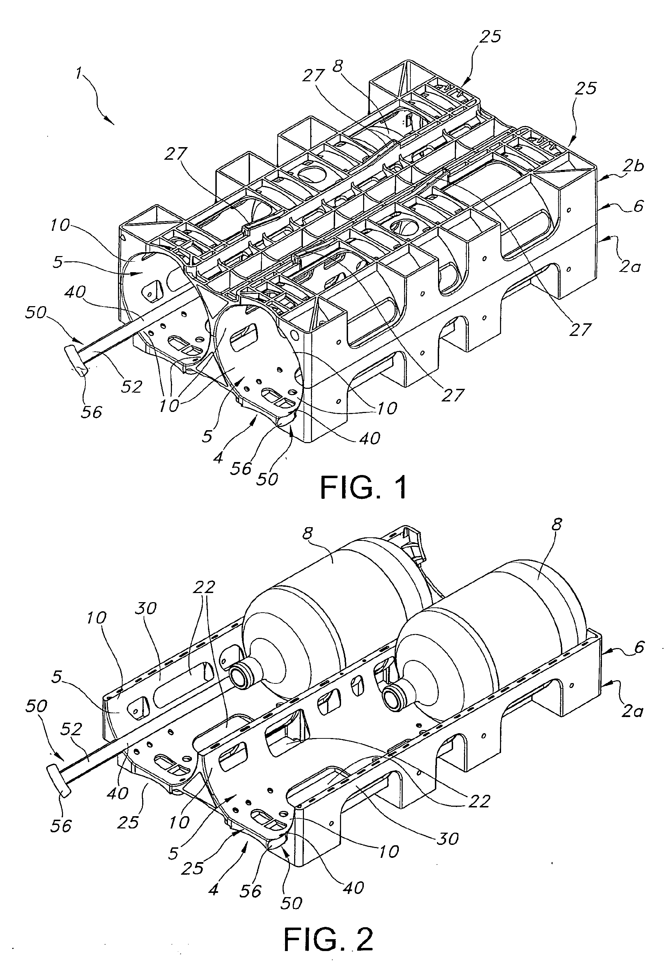

Referring now to the drawings, In which like reference numbers refer to like elements throughout, Fig. 1 shows a stackable storage unit 1, according to a first exemplary embodiment of the present invention. Each storage unit 1 holds a plurality of water bottles 8 or other storable members, and Is configured to be Interlocked with an underlying storage unit or with a frame. While the present invention Is described with respect to modular, stackable storage units 1, the puller assemblies and shock dampeners of the present invention may also be utilized with unitized storage racks having multiple storage apertures defined within a single frame structure or housing. The storage units 1 of the present invention enhance the accessibility to storable members 8 within the storage apertures 5. The storage units 1 of the present invention also enhance the stability of the bottles within the storage apertures 5 to reduce bottle damage and undesired movement or shifting of the bottles during transport.

When used herein, the following words and phrases have the meaning provided. Front shall indicate the storage unit front surface 4 and rear shall indicate the storage unit rear surface 6. Forward shall indicate toward the front surface 4 and rearward shall indicate toward the rear surface 6. Left and right shall indicate the directions when looking at the storage unit front surface 4. Up, upper, upward, above, down, lower, downward, below, underlying, and the like indicate the directions relative to the front surface 4 as shown In Fig. 1. Longitudinal indicates the axis extending from the front surface 4 to the rear surface 6, being oriented generally parallel to the axis of generally cylindrical storable members (e.g., bottles) stored In a storage unit. Lateral and latitudinal indicates the direction between the left and right sides of the storage unit 1.

Referring to Figs. 1-5, storage unit 1 will be described In greater detail. In the present embodiment, the storage unit 1 includes a housing defined by lower and upper housing halves 2a and 2b, respectively. The housing defines a plurality of apertures 5 configured to receive generally cylindrical storable members 8, such as water bottles. Each aperture 5 is bounded by two or more rails 10 extending along the lower half and two or more ralls 10 extending along the upper half 2b. The ralls 10 are supported between end walls 30. An Intermediate wall 20 extends between adjacent apertures 5. Each pair of ralls 10 Is connected together and Interconnected to the end and Intermediate walls 30, 20 by a rib structure 25. Rib structure 25 is disposed under rails 10 such that rib structure 25 does not contact a storable member supported by rails 10. Rib structure 25 comprises an Interconnected network of generally vertical ribs providing vertical support to rails 10 as well as maintaining the position and alignment of rails 10, intermediate wall 20, and end walls 30 relative to each other. As shown in Figs. 1 and 2, rib structure 25 may have openings between the vertical ribs, reducing material, weight, and cost of storage unit 1. To further reduce weight and provide access, access openings 22 may be provided in end walls 30, intermediate wall 20 and rib structure 25. As shown In Fig. 1, the rib structure 25 of the upper half 2b may include upwardly extending projections 27 configured to engage corresponding openings (not shown) In the lower half 2a of another storage unit 1 to facilitate stacking of the storage units 1. Other stacking structures may also be utilized.

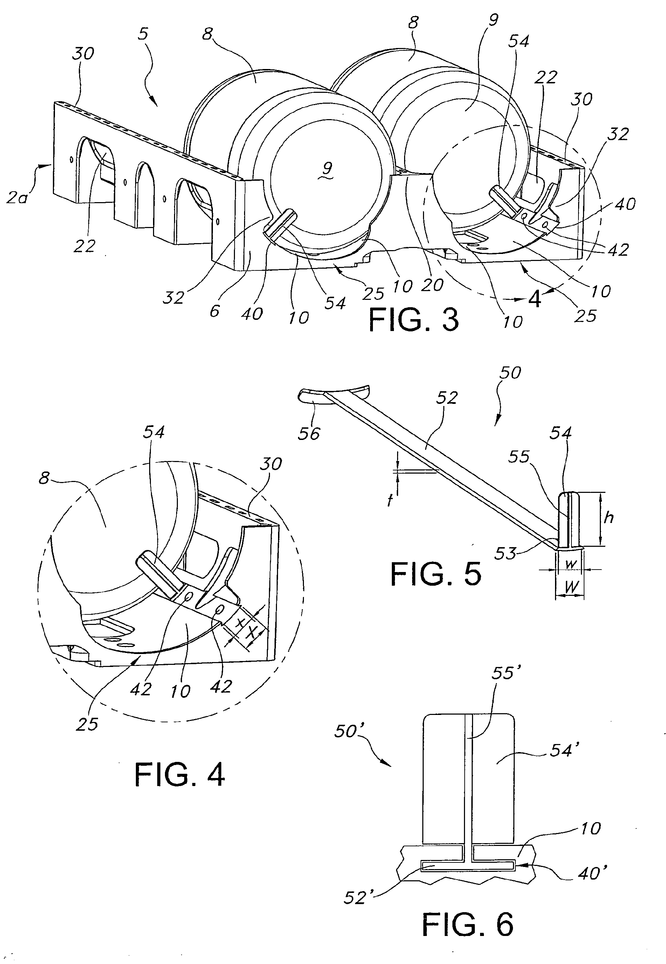

To support the storable members 8, each of the rails 10 has a generally cylindrical surface contoured to complement the surface of the storable member 8 (e.g., water bottle). Preferably, a lower pair of axially extending rails 10 and an upper pair of axially extending rails 10, oriented essentially parallel to the axis of aperture 5, define each aperture 5. Two 5-gallon water bottles or three 3-gallon water bottles can be stored within each aperture 5. Because the rails 10 are contoured, they contact a greater surface area of the water bottles resting on them, reducing any stress in the water bottles. Also, each pair of contoured rails 10 provide lateral support to the water bottles, reducing damage that may be caused by lateral shifting of water bottles during transport and handling. While the exemplary storage unit 1 Illustrated in Figs. 1-3 comprises two apertures 5, each bounded by a pair of longitudinally extending rails 10, embodiments having a larger or smaller number of apertures are contemplated. Although rails 10 are described and illustrated with reference to generally cylindrical storable members 8, rails configured to support the longitudinal surfaces of a generally rectangular storable unit are also contemplated in the present Invention. As shown in Fig. 3, rear wall surfaces 32 extend perpendicularly from each rall 10 along the rear end thereof to provide a stop for storable members 8 positioned rearwardly within the aperture 5.

To enhance access to storable members 8 positioned rearwardly within an aperture 5, the storage unit 1 includes a puller assembly 50 within each aperture 5. Referring to Fig. 5, the puller assembly 50 of the present embodiment includes a longitudinal body 52 extending between a rear engagement member 54 and a forward handle 56. The body 52 Is configured to be positioned in and moved along a guide slot 40 formed in the surface of one of the rails 10. In the present embodiment, each slot 40 Is preferably positioned along one of the laterally outward rails In the lower half 2a of the storage unit 1 and extends from the front surface 4 to the rear surface 6. A portion of the rear wall 32 may be omitted to facilitate the slot 40. As illustrated in Fig. 2, portions of the guide slot 40 may traverse one or more of the access openings 22, however, It Is preferred that the rearward portion of the guide slot 40 does not traverse any of the access openings 22 such that the engagement member 54 area of the puller 50 assembly is supported along Its entire length of travel in moving one of the storable members 8 from a rearward position to a forward position, as will be described In detail hereinafter. Smaller drainage holes 42 may be provided intermittently spaced along each guide slot 40 to permit drainage of debris and the like that may become positioned In the guide slots 40 while the slot 40 still supports the puller assembly engagement member 54.

Each guide slot 40 has a configuration that complements the cross-section of the puller body 52. As shown in Fig. 5, the puller body 52 of the present embodiment has a dovetail cross-section with an upper surface width w that is narrower than the width W of the lower surface thereof. Accordingly, the guide slot 40 of the present embodiment also has a dovetail configuration with the width x along the rall surface being narrower than the width X at the bottom of the slot 40. A slight clearance Is preferably provided between the puller body 52 and the guide slot 40 such that the puller assembly 50 Is longitudinally moveable along the guide slot 40. Fig. 6 Illustrates an alternate embodiment wherein the puller assembly 50' is manufactured from t-stock such that the puller body 52' has an upside down "T" cross-section. The guide slot 40' has a corresponding upside down "T" cross-section. The engagement member 54' extends above the slot 40' with the stem of the t-stock defining a support rib 55', The puller body 52 and the guide slot 40 may have other complementary configurations, Including configurations wherein the puller body 52 is not locked within the slot 40, for example, a rectangular cross-section,

The puller body 52 has a longitudinal length approximately equal to the longitudinal length of the aperture 5 such that when the puller 50 Is fully inserted, see the right side aperture 5 In Figs. 2 and 3, the handle 56 is adjacent to the storage unit front surface 4 and the engagement member 54 Is adjacent to the rear wall 32 at the storage unit rear surface 6. The handle 56 of the present embodiment has a generally planar configuration that lies along the plane of the storage unit front surface 54, but may have various other configurations. Additionally, the storage unit front surface 4 may be provided with a recess to receive the handle 56, but such is not necessary.

The engagement member 54 extends from the rear end of the puller body 52 substantially perpendicular thereto such that the engagement member 54 is positioned to engage a rearward surface 9 of the storable member 8. The engagement member 54 preferably has a height h such that the engagement member 54 extends sufficiently to engage the flat portion of the rearward surface 9 In the case of a water bottle, However, the engagement member 54 may engage the rounded edge of a water bottle or the like and still effectively move the water bottle forward, In the present embodiment, the engagement member 54 is strengthened with a rear rib 55 and a forward gusset 53 extending between the body 52 and the engagement member 54. The gusset 53 may have a curved profile that complements the rounded edge of a water bottle. In applications wherein the storable member 8 is other than a water bottle, the gusset 53 may be configured accordingly.

In operation, to access a rearwardly positioned storable member 8, the handle 56 is pulled forward such that the engagement member 54 engages a rearward surface 9 of the storable member 8 and moves the storable member 8 with the puller assembly 50. The engagement member 54 portion of the puller assembly 50 is supported within the guide slot 40 along the length of travel of the storable member 8 from the rearward position to the forward position. The guide slot 40 supports the engagement member and prevents disengagement from the storable member 8. The storage unit ralls 10 are preferably manufactured from or coated with a material with a coefficient of friction sufficiently low such that the storable members 8 move relatively easily within the aperture 5. For example, the lower and upper halves 2a and 2b of the storage unit 1 are preferably molded from a polymer material, for example, polycarbonate, with the guide slots 40 molded Integrally therein. Since the puller body 52 is recessed within the guide slot 40, the puller assembly 50 does not interfere with movement of the storable member 8.

The puller assembly 50 Is preferably manufactured from a polymeric material, for example, polypropylene, but may be manufactured from other natural or synthetic materials including plastics and metals. The puller body 52 preferably has a thickness t such that the selected material has a vertical elasticity at at least the forward end of the puller body 52. Such elasticity allows the puller body 52 to bend and return to Its original configuration In the event the puller body 52 receives a significant vertical force. For example, If the puller assembly 50 Is inadvertently left in an extended position, see the left side aperture 5 in Figs. 1 and 2, and an operator closes the truck door, the puller body 52 bends vertically without breaking. Upon opening of the truck door, the puller body 52 returns to the extended position and continues to be useable.

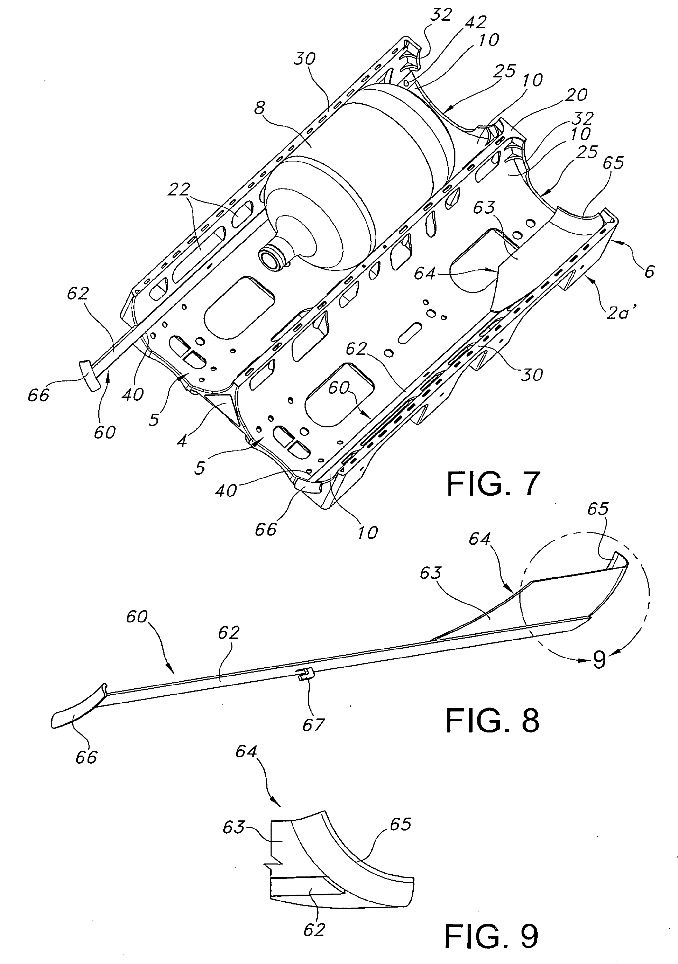

Referring to Figs. 7-10, a storage unit 1' that is a second exemplary embodiment of the present invention is shown. The storage unit 1' is similar to the storage unit 1 of the first embodiment and includes a housing defined by a lower half 2a' and an upper half 2b. The upper half 2b is identical to the upper half 2b of the first embodiment. The lower half 2a' is similar to the lower half 2a, and includes guide slots 40 extending along the laterally outward ralls 10. The lower half 2a' of the present embodiment differs from the lower half 2a of the first embodiment In that the lower half 2a' includes a return mechanism slot 43 as will be described hereinafter.

As In the previous embodiment, a puller assembly 60 Is positioned In each aperture 5. Puller assembly 60 Is similar to puller assembly 50 and Includes a longitudinal body 62 extending between a handle 66 and an engagement member 64. As in the previous embodiment, each guide slot 40 has a cross-sectional configuration that complements the cross-sectional configuration of the puller body 62. As shown In Figs. 8 and 9, puller body 62 has a dovetail cross-section. Accordingly guide slot 40 also has a dovetail cross-sectional configuration. Other complementary configurations may also be utilized.

Engagement member 64 includes a longitudinally extending contact portion 63 and a radially extending contact portion 65. The longitudinally extending contact portion 63 extends along and above the top surface of the puller body 62. The longitudinally extending contact portion 63 has a configuration that complements the inner surface of the aperture 5. The longitudinally extending contact portion 63 fits In the clearance between the storable member 8 and the inner surface of the aperture 5 and reduces such clearance, thereby reducing potential Impact between the storable member 8 and the storage unit 1'. The radially extending contact portion 65 extends radially Inward from the longitudinally extending contact portion 63 and is configured to contact a rearward portion of the storable member 8. The junction between the radially extending contact portion 65 and the longitudinally extending contact portion 63 is preferably configured to complement the shape of the rearward portion of the storable member 8. In the Illustrated example In which the storable member 8 is a water bottle, the junction has a curve consistent with the curve along the bottom edge of the water bottle.

Operation of the puller assembly 60 is similar to the previous embodiment such that the handle 66 Is pulled forward to move the engagement member 64 forward. The storable member 8 is supported on the longitudinally extending contact portion 63 and the radially extending contact portion 65 engages a rearward portion of the storable member 8 to urge the storable member 8 forward. While the longitudinally extending contact portion 63 takes up some of the clearance between the storable member 8 and the inside of the aperture 5, minimal clearance is maintained such that a significant additional friction force is not created between the storable member 8 and the top Inner surface of the aperture 5. The longitudinally extending contact portion 63 has a width wider than the slot 40 and also preferably wider than any access openings 22 that may be provided along the rall 10. As such, the rail 10 supports the longitudinally extending contact portion 63, and thereby the radially extending contact portion 65, along the length of travel to minimize the chance of disengagement between the radially extending contact portion 65 and the storable member 8.

Since the longitudinally extending contact portion 63 supports at least a portion of the weight of the storable member 8, it is preferable that the engagement member 64 and/or the rail 10 are manufactured from or coated with a material that minimizes friction between the engagement member 64 and the rail 10. Similarly, since a portion of such weight may be translated through the engagement member 64 to the puller body 62, it is preferable that the puller body 62 and/or the guide slot 40 are manufactured from or coated with a material that minimizes friction between the puller body 62 and the guide slot 40.

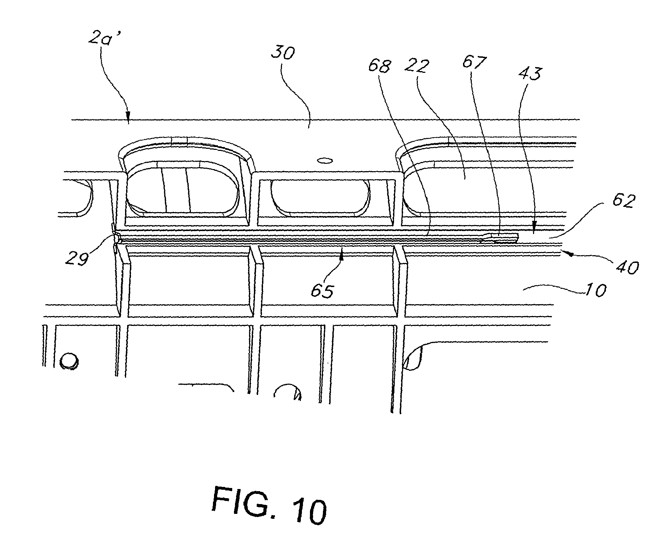

After the storable member 8 has been pulled to a forward position, it is desirable to return the puller assembly 60 to the retracted position where it is ready for the next rearwardly positioned storable member 8. The puller assembly 60 Includes a return assembly 65 configured to automatically return the puller assembly 60 to the retracted position. Referring to Figs. 8 and 10, the return assembly 65 Includes a hook 67 or the like extending from the underside of the puller body 62 and a retainer 29 provided on the underside of the storage unit lower half 2a' toward the rear end thereof. An elastic member 68, for example, an elastic band or cord or any of various springs, extends between the hook 67 and the retainer 29. A large return force is not required. A sufficient return force can be achieved by, for example, a 3/8 Inch diameter stainless coil tension spring. A through track 43 is provided In at least a portion of the guide slot 40 to facilitate forward movement of the hook 67. As the user pulls the handle 66 forward, the hook 67 moves forward and away from the retainer 29 such that the elastic member 68 is loaded. Upon release of the handle 66, the stored energy in the elastic member 68 pulls the hook 67 rearward, thereby returning the puller assembly 60 to the retracted position.

The puller assembly 60 is preferably manufactured as a unitary component, for example, through injection molding. However, one or more of the body 62, engagement member 64, handle 66 or hook 67 may be manufactured separately and attached to the puller assembly 60. Similarly, the retainer 29 may be manufactured as a unitary component of the storage unit lower half 2a' or may be a separate component that Is attached thereto.

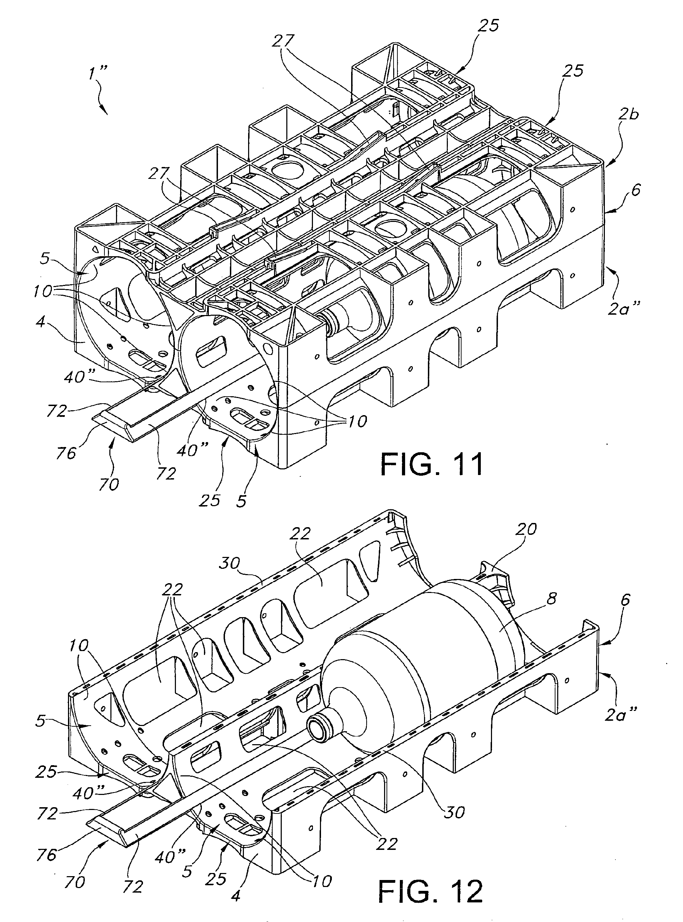

Referring to Figs. 11-14, a storage unit 1" that Is a third exemplary embodiment of the present invention is shown. The storage unit 1" is similar to the storage unit 1 of the first embodiment and Includes a housing defined by a lower half 2a" and an upper half 2b. The upper half 2b is identical to the upper half 2b of the first embodiment. The lower half 2a" Is similar to the lower half 2a, but includes guide slots 40" extending along the laterally inward rails 10 such that the guide slots 40" in adjacent apertures 5 are separated by the intermediate wall 20. The proximity of the guide slots 40" facilitates a dual puller assembly 70.

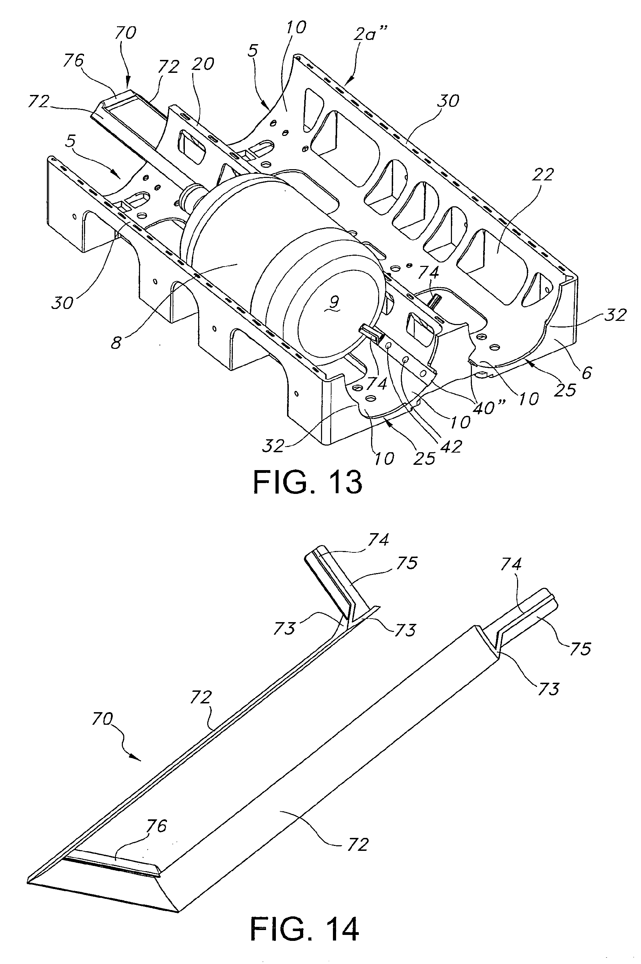

Referring to Fig. 14, the dual puller assembly 70 Includes a pair of spaced apart longitudinal bodies 72 joined at their forward ends by a handle 76. The rear end of each longitudinal body 72 includes an engagement member 74 extending perpendicularly therefrom. As In the first embodiment, each guide slot 40" has a cross-sectional configuration that complements the cross-sectional configuration of the corresponding body 72. Similar to the first embodiment, each longitudinal body 72 has a dovetail cross-section and each guide slot 40" has a dovetail cross-sectlonal configuration. Other complementary configurations may also be utilized. Each engagement member 74 is provided with a double gusset 73 and a support rib 75 to strengthen the engagement member.

In operation, the handle 76 is moved into engagement with the storage unit front surface 4, thereby positioning each engagement member 74 In the rear of a respective aperture 5. Storable members 8 are positioned in the apertures 5 with the engagement members 74 engaging rearward surfaces 9 of the storable members 8. Forward movement of the handle 76 causes both engagement members 74 to move forward, thereby moving the storable members 8 forward. If only one of the apertures 5 contains a rearwardly positioned storable member 8, then only that one storable member 8 will be moved forward. As in the first embodiment, the guide slots 40" support the respective engagement members 74 and prevent disengagement from the storable members 8. Again, since the puller bodies 72 are recessed within respective guide slots 40", the puller assembly 70 does not Interfere with movement of the storable members 8.

The puller assembly 70 is preferably manufactured from a polymeric material, for example, polypropylene, but may be manufactured from other natural or synthetic materials Including plastics and metals. The puller bodies 72 preferably have respective thicknesses such that the selected material has a vertical elasticity at at least the forward end of the puller bodies 72, as in the first embodiment.

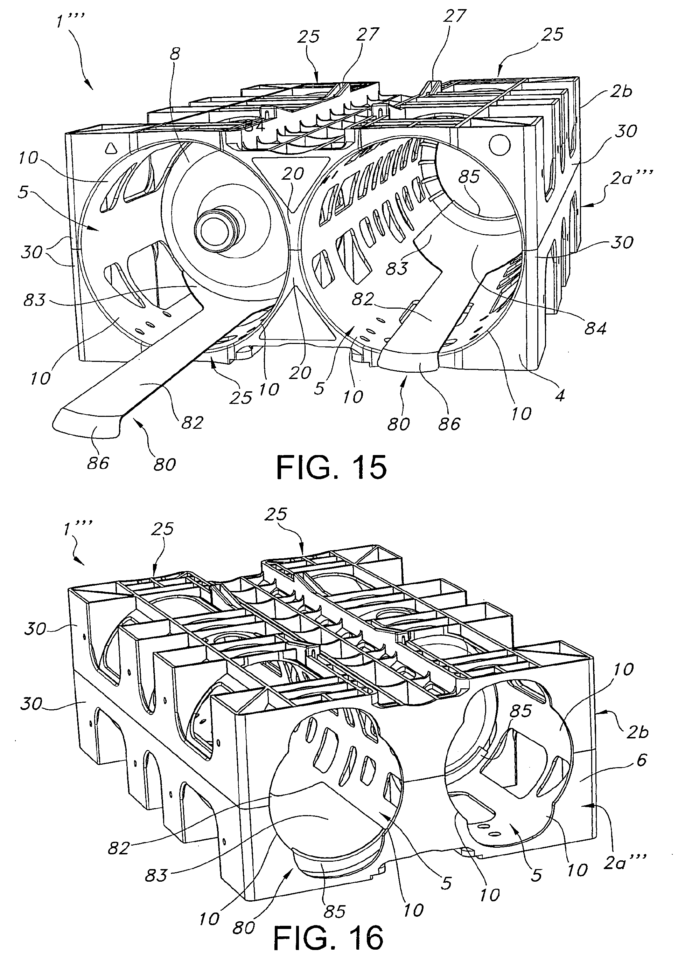

Referring to Figs. 15-18, a storage unit 1''' that Is a fourth exemplary embodiment of the present Invention is shown. The storage unit 1''' is similar to the storage unit 1 of the first embodiment and includes a housing defined by a lower half 2a"' and an upper half 2b. The upper half 2b is identical to the upper half 2b of the first embodiment. The lower half 2a'" of the present embodiment differs from the lower half 2a of the first embodiment In that the lower half 2a"' does not Include any guide slots. As will be described hereinafter, a puller assembly 80 Is positioned in each aperture 5, however, the puller assemblies 80 are not confined by a guide slot, but Instead are freely moveable within the apertures 5.

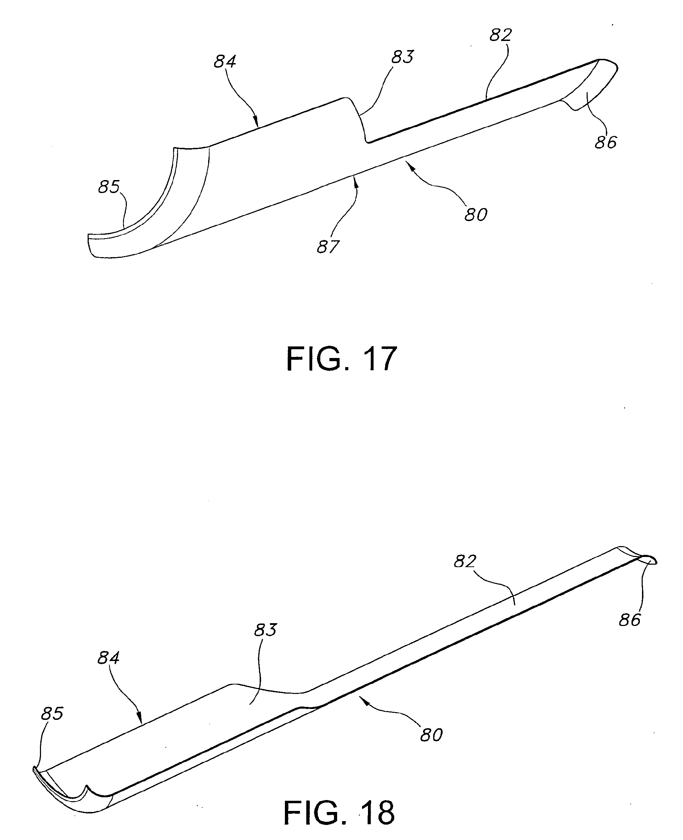

Each puller assembly 80 Includes a longitudinal body 82 extending between a handle 86 and an engagement member 84. As in the second embodiment, engagement member 84 includes a longitudinally extending contact portion 83 and a radially extending contact portion 85. The longitudinally extending contact portion 83 does not sit upon the puller body 82, but instead Is formed co-planar therewith such that the puller assembly 80 has a smooth lower surface 87, as best seen in Fig. 17. The puller assembly 80 does not Include a dovetail or the like configured to engage a slot, but instead the smooth lower surface 87 Is configured to be positioned on and move along the inside surface of the aperture 5. In the present embodiment, the puller body 82 has a wider, arcuate configuration such that the puller body 82 engages a larger arc of the aperture 5 inner surface. Additionally, the longitudinally extending contact portion 83 has a wide, arcuate configuration that complements the Inner surface of the aperture 5. Orientation of the puller assembly 80 within the aperture 5 is not critical, but the wider, arcuate configurations of the puller body 82 and the longitudinally extending contact portion 83 provide some control over the positioning of the puller assembly 80 and maintain the longitudinal alignment of the puller assembly 80 parallel to the axis of the aperture 5.

The longitudinally extending contact portion 83 supports the storable member 8 and fits in the clearance between the storable member 8 and the inner surface of the aperture 5. The longitudinally extending contact portion 83 reduces the clearance and thereby reduces the potential impact between the storable member 8 and the storage unit 1'''. The radially extending contact portion 85 extends radially inward from the longitudinally extending contact portion 83 and Is configured to contact a rearward portion of the storable member 8. The junction between the radially extending contact portion 85 and the longitudinally extending contact portion 83 Is preferably configured to complement the shape of the rearward portion of the storable member 8. In the illustrated example In which the storable member 8 Is a water bottle, the junction has a curve consistent with the curve along the bottom edge of the water bottle.

Operation of the puller assembly 80 is similar to the first embodiment such that the handle 86 is pulled forward to move the engagement member 84 forward. The storable member 8 Is supported on the longitudinally extending contact portion 83 and the radially extending contact portion 85 engages a rearward portion of the storable member 8 to urge the storable member 8 forward. While the longitudinally extending contact portion 83 takes up some of the clearance between the storable member 8 and the inside of the aperture 5, minimal clearance Is maintained such that a significant additional friction force is not created between the storable member 8 and the top Inner surface of the aperture 5. Since the longitudinally extending contact portion 83 supports the weight of the storable member 8, it is preferable that the longitudinally extending contact portion 83 and/or the rail 10 are manufactured from or coated with a material that minimizes friction between the longitudinally extending contact portion 83 and the rail 10.

As In the first embodiment, the puller body 82 preferably has a configuration such that the puller body 82 has a vertical elasticity at at least the forward end thereof. Such elasticity allows the puller body 82 to bend and return to its original configuration In the event the puller body 82 receives a significant vertical force. For example, If the puller assembly 80 is Inadvertently left in an extended position, see the left side aperture 5 In Fig. 15, and an operator closes the truck door, the puller body 82 bends vertically without breaking. Upon opening of the truck door, the puller body 82 returns to the extended position and continues to be useable.

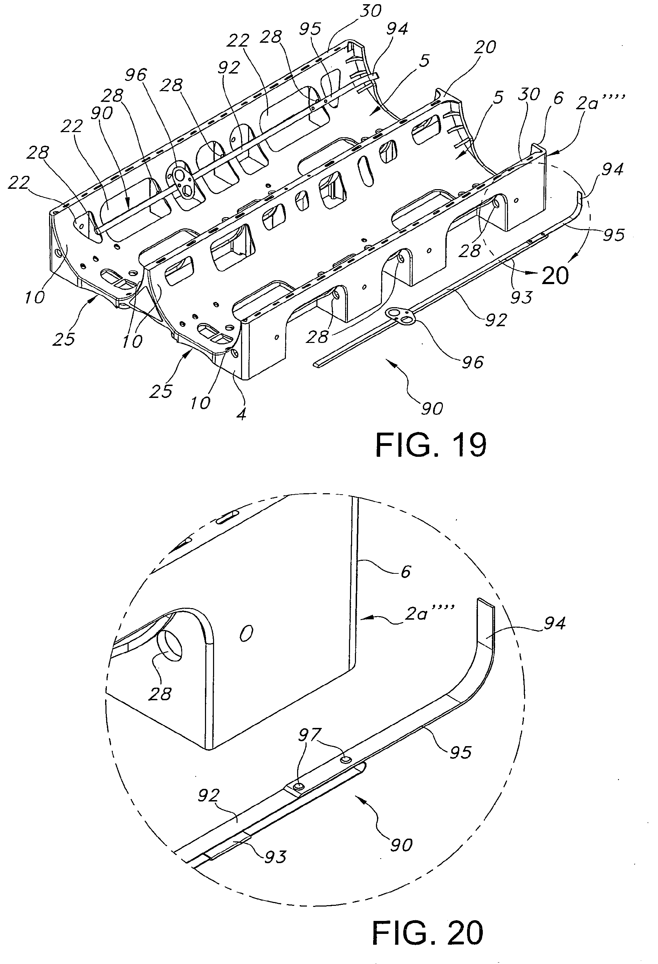

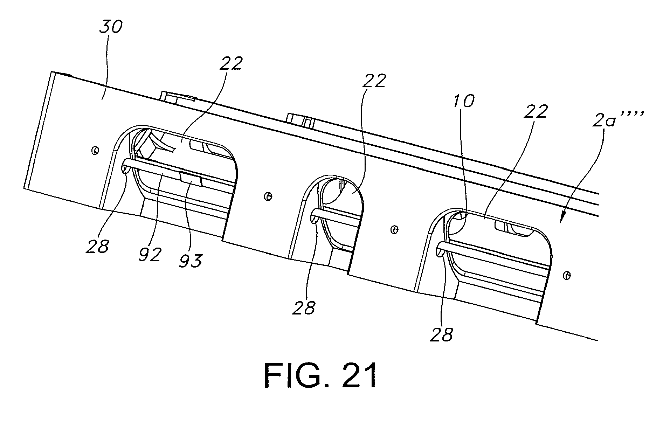

Referring to Figs. 19-21, a storage unit 1"" that is a fifth exemplary embodiment of the present Invention is shown. The storage unit 1"" Is similar to the storage unit 1 of the first embodiment and Includes a housing defined by a lower half 2a"" and an upper half 2b. The upper half 2b is identical to the upper half 2b of the first embodiment. The lower half 2a"" is similar to the lower half 2a, but does not Include guide slots. In place of the guide slots, the lower half 2a"" includes guide holes 28 as will be described below.

In the present embodiment, each aperture 5 of the storage unit is provided with a puller assembly 90. Each puller assembly 90 includes a continuous loop strap 92 configured to move an associated engagement member 94. The strap 92 Is preferably manufactured from polypropylene, but may be manufactured from other natural and synthetic materials including plastics and metals. The strap 92 extends along the surface of a respective rall 10. The ends of the strap 92 are passed through respective access openings 22, passed through the guide holes 28 passing through the rib structure 25, and joined at 93 via crimping, bonding, welding, adhesive, rivets, bolts or the like. Handle 96 is attached to a portion of the strap 92 extending along the rail surface and is configured to move the continuous loop strap 92 over a portion of the loop.

Referring to Fig. 20, an extension member 95 extends between the strap 92 and the engagement member 94. The extension member 95 Is connected to the strap 92 via rivets 97. Other connection methods, including but not limited to bolts, adhesive, bonding, welding or the like may also be utilized. Interconnection between the extension member 95 and the strap 92 causes the engagement member 94 to move In conjunction with movement of the strap 92.

In operation, the puller assembly 90 is in the initial position shown In the left aperture 5 of Fig. 19. A rearward surface of a storable member 8 (not shown) positioned in a rearward position of the aperture 5 is engaged by the engagement member 94, To move the storable member 8 forward, the handle 96 is moved from the Illustrated position to a position proximate to the forward most guide hole 28. Movement of the handle 96 causes movement of the loop strap 92 and thereby the engagement member 94 via the extension member 95. The strap 92 preferably has a thickness that is less than the clearance between the storable member 8 and the Inside surface of the aperture 5 such that the strap 92 does not interfere with movement of the storable member 8. During movement from the rearward position toward the forward position, the engagement member 94 is supported by the looped strap 92, which Is in turn confined by the guide holes 28. As such, the engagement member 94 Is supported during travel and the chance of disengagement from the storable member 8 is reduced.

When the handle 96 Is In the forward position adjacent the forward most guide hole 28, the handle 96 is within the aperture 5 and, therefore, does not provide any Interference to the operator nor Is the handle 96 at risk of being contacted by a closed truck door or the like. The handle 96 does not have to be moved to the initial position, but can Instead be left in the forward position. Upon loading of a new storable member 8 In the aperture 5, the storable member 8 contacts the engagement member 94 and moves the engagement member 94 rearward. The rearward movement of the engagement member 94 moves the strap 92 which In turn moves the handle 96 to the initial position, thereby automatically resetting the puller assembly 90 for use.

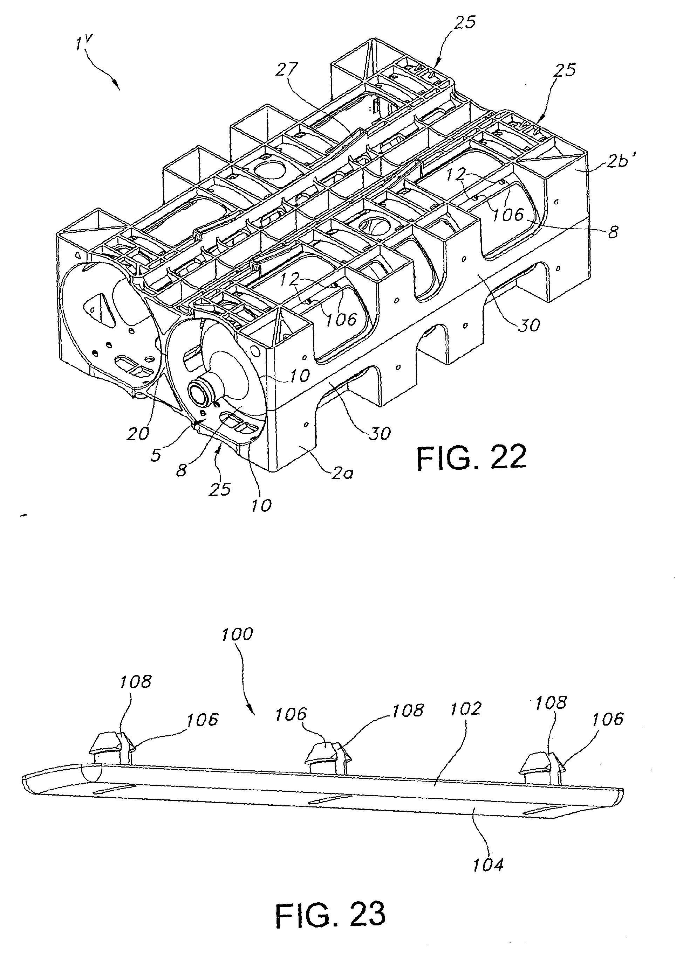

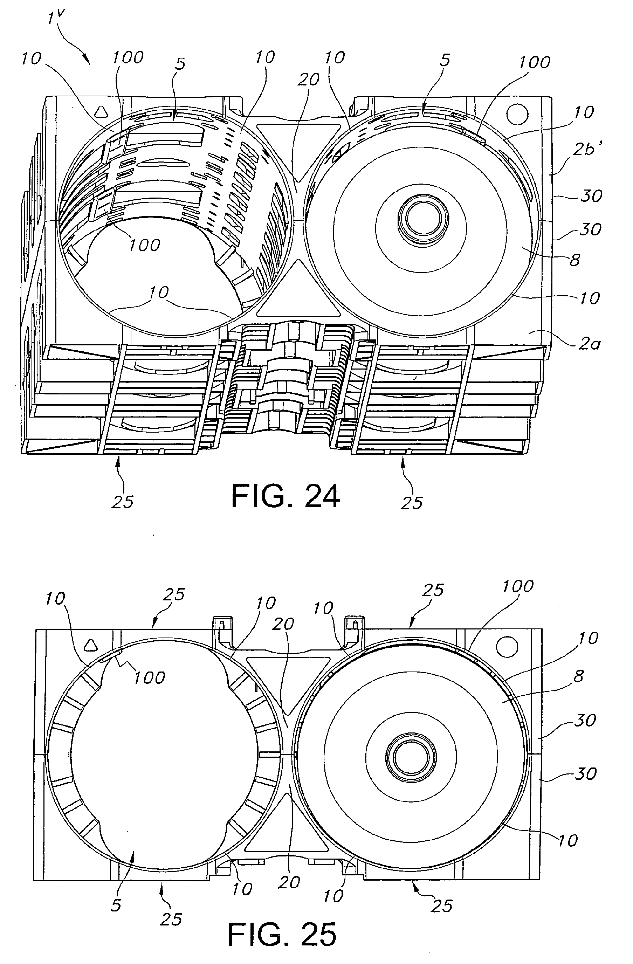

Referring to Figs. 22-25, a storage unit 1^{v} Incorporating a shock dampener 100 Is Illustrated. A puller assembly is not illustrated in these figures as the shock dampener 100 can be utilized with each of the embodiments described above, While some of the embodiments described above Include a puller assembly In which a portion of the puller assembly Is positioned in the clearance between the storable member 8 and the inside surface of the aperture 5, and thereby acts as a shock dampener, the shock dampener 100 can be utilized with those embodiments to provide additional shock dampening. The shock dampener 100 described herein can be utilized with each of the above described embodiments, but does not have to be utilized.

Referring to Fig. 23, the shock dampener 100 Includes a longitudinally extending body 102 having an inner surface 104. The Inner surface 104 preferably has an arcuate configuration which complements the shape of the storable members 8, however, the inner surface 104 may have various configurations, including a planar configuration. The shock dampener 100 of the present embodiment Includes a plurality of outer projections 106 configured to engage holes 12 provided in the storage unit upper half 2b', The projections 106 include slots 108 to facilitate passage of the projections 106 through the holes 12 and to accommodate variations In expansion of the projections 106 and the storage unit upper half 2b'. Various other means may be utilized to connect the shock dampeners 100 to the storage unit 1^{v}. For example, the shock dampeners 100 may be attached using bolts, screws, rivets, clips or other fasteners, adhesives or bonding methods, or may be molded with the storage unit 1^{v}, for example, using a two-shot injection mold.

The shock dampeners 100 may extend the full longitudinal length of the aperture 5 or may be provided at spaced intervals as Illustrated. The shock dampeners 100 are preferably provided along the upper inner surfaces of the apertures 5, but may alternatively or additionally be provided along the side or bottom surfaces thereof, The shock dampeners 100 may be manufactured from various materials Including materials that are very soft, low durometer materials or harder, higher durometer materials. For example, the shock dampeners 100 may include a solid material or alternatively, a fluid filled member which provides the shock absorption. In the fluid filled embodiment, the member may be, for example, a sealed or refillable polymer sack. The fluid may Include air, some other gas or a liquid.

The materials and configuration of the dampener body 102 are selected to maximize the amount of shock dampening while maintaining minimal friction exerted on the storable members 8. In this regard, the dampener body 102 may be chosen to provide minimal clearance with respect to the storable members 8, to minimize movement or vibration thereof during transit, while still allowing removal of the storable members 8 with minimum friction.

Although illustrated and described above with reference to certain specific embodiments, the present Invention is nevertheless not Intended to be limited to the details shown. Rather, various modifications may be made in the details within the scope and range of equivalents of the claims and without departing from the invention.

## Claims

1. A storage rack comprising:
a storage unit housing defining at least one aperture extending longitudinally between a forward end and a rearward end and adapted to receive at least one storable member;
a puller assembly including a longitudinal puller body that supports an engagement member adjacent a rear end thereof, the puller assembly positioned in the aperture and moveable between a first position In which the engagement member is adjacent the aperture rearward end and a second position In which the engagement member Is moved toward the aperture forward end; and
wherein the storage unit housing and the puller assembly are configured such that the engagement member is vertically supported during movement between the first and second positions.

2. The storage rack according to claim 1 wherein the storage unit housing defines a longitudinal guide slot along the at least one aperture which is configured to receive and guide at least a portion of the puller assembly.

3. The storage rack according to claim 2 wherein the guide slot Is configured to receive the longitudinal puller body.

4. The storage rack according to claim 2 or 3 wherein the guide slot and the longitudinal puller body each have a dovetail cross-section.

5. The storage rack according to claim 2 or 3 wherein the guide slot and the longitudinal puller body each have an inverted T cross-section.

6. The storage rack according to any one of claims 3 to 5 wherein one or both of the guide slot and the puller body are manufactured from or coated with a material which reduces friction between the guide slot and the puller body.

7. The storage rack according to any one of claims 2 to 6 wherein the storage unit housing defines a support surface within the at least one aperture and the guide slot Is recessed relative to the support surface,

8. The storage rack according to claim 7 wherein the longitudinal puller body is positioned within the guide slot such that the puller body is flush with or recessed from the support surface and the engagement member extends above the support surface.

9. The storage rack according to any preceding claim wherein the engagement member includes a longitudinally extending contact portion and a radially extending contact portion.

10. The storage rack according to claim 9 wherein the longitudinally extending contact portion has a circumferential width greater than a width of the guide slot.

11. The storage rack according to claim 9 or 10 wherein the longitudinally extending contact portion has a configuration which complements the support surface such that the longitudinally extending contact portion is vertically supported by the support surface.

12. The storage rack according to any one of claims 9 to 11 wherein one or both of the support surface and the longitudinally extending contact portion are manufactured from or coated with a material which reduces friction between the support surface and the longitudinally extending contact portion.

13. The storage rack according to any preceding claim further comprising a return assembly extending between the puller assembly and the storage unit housing.

14. The storage rack according to claim 13 wherein the return assembly includes an elastic member attached between the puller assembly and the storage unit housing such that the elastic member is energized as the puller assembly Is moved from the first position to the second position.

15. The storage rack according to any preceding claim wherein the storage unit housing defines a second aperture adjacent the at least one aperture and a second puller assembly is positioned in the second aperture, wherein a handle joins the puller assemblies such that movement of the handle simultaneously moves both puller assemblies between a first position In which each respective engagement member Is adjacent the respective aperture rearward end and a second position In which each respective engagement member is moved toward the respective aperture forward end.

16. The storage rack according to claim 15 wherein the handle is adjacent to a front surface of the storage unit housing when the puller assemblies are In the first position.

17. The storage rack according to any preceding claim wherein the engagement member Includes a longitudinally extending contact portion and a radially extending contact portion.

18. The storage rack according to claim 17 wherein the puller body and the longitudinally extending contact portion are co-planar and define a continuous contact surface substantially the length of the puller assembly.

19. The storage rack according to claim 17 or 18 wherein the storage unit housing defines a support surface within the at least one aperture, and wherein the contact surface has a configuration which complements the support surface such that the contact surface is vertically supported by the support surface along its length.

20. The storage rack according to claim 19 wherein one or both of the support surface and the contact surface are manufactured from or coated with a material which reduces friction between the support surface and the contact surface.

21. The storage rack according to any preceding claim wherein the puller body includes a continuous loop strap which extends along a support surface of the at least one aperture and through respective guide holes extending through the storage unit housing below the support surface.

22. The storage rack according to claim 21 wherein an extension member extends between the continuous loop strap and the engagement member.

23. The storage rack according to claim 21 or 22 wherein a handle is provided along the continuous loop strap, the handle being positioned within the at least one aperture in both the first and second positions.

24. The storage rack according to any preceding claim wherein the puller assembly includes a handle which is positioned adjacent to a front surface of the storage unit housing when the puller assembly is In the first position.

25. The storage rack according to any preceding claim wherein at least a portion of the puller body is configured to have a vertical elasticity.

26. The storage rack according to any preceding claim wherein the at least one aperture Includes a shock dampener positioned along an Inner surface thereof.

27. The storage rack according to claim 26 wherein the shock dampener extends longitudinally within the at least one aperture.

28. The storage rack according to claim 26 or 27 wherein the shock dampener includes a fluid filled member.

29. The storage rack according to any one of claims 26 to 28 wherein the shock dampener is manufactured from a soft solid, low durometer material.

30. The storage rack according to any one of claims 26 to 29 wherein the shock dampener is manufactured from a hard solid, high durometer material.
